# EUROPÄISCHE PATENTSCHRIFT

(11) **EP 0 648 245 B1**
(45) Veröffentlichungstag und Bekanntmachung des Hinweises auf die Patenterteilung: **12.03.1997**
(21) Anmeldenummer: 93914709.6
(22) Anmeldetag: 24.06.1993
(51) Int. Cl.: C08J 9/22, B29C 44/00, C08L 23/02

(54) **VORRICHTUNG ZUR DRUCKBEHANDLUNG VON VORGESCHÄUMTEN TEILCHEN AUS EINEM THERMOPLASTISCHEN POLYMEREN**
DEVICE FOR THE PRESSURE TREATMENT OF THERMOPLASTIC-POLYMER PRE-FOAMED PARTICLES
DISPOSITIF POUR LE TRAITEMENT SOUS PRESSION DE PARTICULES D'UN POLYMERE THERMOPLASTIQUE SOUMISES A UN PRE-MOUSSAGE

(30) Priorität: 01.07.1992 DE 4221603
(43) Veröffentlichungstag der Anmeldung: 19.04.1995
(73) Patentinhaber: BASF Aktiengesellschaft, 67063 Ludwigshafen (DE)
(72) Erfinder: TATZEL, Hermann, D-6940 Weinheim (DE); HAARDT, Udo, D-6843 Biblis (DE)
(86) Internationale Anmeldenummer: EP9301609
(87) Internationale Veröffentlichungsnummer: WO9401490

(56) Entgegenhaltungen:
- EP-A- 0 108 245
- EP-A- 0 296 438
- US-A- 4 804 507

## Beschreibung

Die Erfindung betrifft eine Vorrichtung zur Druckbehandlung von vorgeschäumten Teilchen aus einem thermoplastischen Polymeren.

Verfahren und Vorrichtungen zur Druckbehandlung von vorgeschäumten Teilchen aus einem thermoplastischen Polymeren sind bekannt.

So ist in der DE-C 16 29 296 ein Verfahren zur Herstellung geschlossenzelliger Schaumstoffteilchen aus Ethylenpolymerisaten bekannt, bei dem vorgeschäumte Ethylenpolymerisatteilchen bei Temperaturen bis zu 20°C unter dem Schmelzpunkt des Polymerisats und erhöhten Drücken in indifferenten Gasen gelagert werden, deren Permeabilitätskoeffizient gegenüber dem Polymerisat gleich oder kleiner als der der Luft ist. Die Druckbehandlung wird so lange durchgeführt, bis die durch das Schäumen erzielte Form sowie das Raumgewicht der Ethylenpolymerisat-Teilchen wiederhergestellt sind.

Aus der EP-B 81 797 ist ein Verfahren zur Druckbehandlung von vorgeschäumten Teilchen aus einem Polyolefin bekannt, bei dem vorgeschäumte Teilchen in einer Atmosphäre eines unter Druck stehenden Gases gehalten werden, um auf sie einen inneren Druck auszuüben, und durch Einführen eines anorganischen Gases oder eines Gemisches aus einem anorganischen Gas und einem Treibmittel in einen Behälter einem anfänglichen Druck von nicht mehr als 1,47 x 10⁴ Pa unterworfen werden, wobei dieser anfängliche Druck kein Schrumpfen der Teilchen verursacht. Der angewandte Druck wird anschließend stufenweise oder kontinuierlich mit einer Geschwindigkeit von nicht mehr als 1,96 x 10⁴ Pa pro Stunde allmählich erhöht, wobei diese Stufe des Erhöhens des angewandten Drucks kein Schrumpfen der Teilchen verursacht.

Diese Verfahren haben jedoch einige Nachteile. Bei dem Verfahren der EP-B 81 797 ist es nötig, die Druckbehandlung über einen langen Zeitraum hinweg durchzuführen. Bei beiden Verfahren wird außerdem das Volumen des Druckbehandlungsgefäßes nur unzureichend ausgenutzt.

Die US 4 804 507 beschreibt ein Verfahren zur Druckbehandlung von vorgeschäumten Teilchen aus einem thermoplastischen Polymeren durch Überführen dieser vorgeschäumten Teilchen aus einem Vorratsbehälter in einen ersten Drucktank, anschließendes Überführen der Teilchen über eine Schleuse in einen Hauptdruckbehälter und Lagern der Teilchen in diesem Behälter. Dieser Hauptdruckbehälter besteht aus einer Vielzahl von Fächern und Kammern, in denen die vorgeschäumten Teilchen langsam und gleichmäßig nach unten befördert werden. Dies ist eine aufwendige und komplizierte Apparatur, die darüberhinaus noch den Nachteil hat, daß es bei der Vielzahl der gegeneinander teilweise versetzten abgeschlossenen Kammern bei einem plötzlichen Druckabfall infolge unkontrollierter Expansion zu Verstopfung kommen kann.

Aufgabe der vorliegenden Erfindung war es daher, eine Vorrichtung aufzuzeigen, die die geschilderten Nachteile nicht aufweist.

Es wurde nun gefunden, daß die geschilderten Nachteile dann nicht auftreten, wenn zwischen dem Vorratsgefäß und dem Druckbehandlungsgefäß eine Druckschleuse angeordnet ist, und das Druckbehandlungsgefäß aus einer einzigen Kammer besteht.

Gegenstand der Erfindung ist demzufolge eine Vorrichtung zur Druckbehandlung von vorgeschäumten Teilchen aus einem thermoplastischen Polymeren, bestehend aus einem Vorratsbehälter 8 für die vorgeschäumten thermoplastischen Polymerteilchen und einem Druckbehandlungsbehälter 10, zwischen die eine Druckschleuse 9 angeordnet ist, wobei der Druckbehandlungsbehälter aus einer einzigen Kammer besteht.

Die im Verfahren eingesetzten vorgeschäumten thermoplastischen Teilchen bestehen aus einem thermoplastischen Polymer wie beispielsweise einem Polystyrol, Styrolcopolymerisat oder einem Polyolefin oder von Mischungen hiervon, wobei bevorzugt vorgeschäumte Polyolefinteilchen eingesetzt werden.

Polyolefine im Sinne der Erfindung sind kristalline Olefinpolymerisate, deren Röntgenkristallinität bei 25°C über 25 % liegt. Für das Verfahren eignen sich Polyethylene niedriger, mittlerer und hoher Dichte, beispielsweise der Dichte 0,916 bis 0,965, vorzugsweise 0,920 bis 0,935 g/cm³, wie sie nach Hoch-, Nieder- und Mitteldruckverfahren hergestellt werden, Polypropylen sowie Ethylen- und Propylencopolymere, die mindestens 50 Mol-% Ethylen-und/oder Propylen-Einheiten enthalten. Geeignete Comonomere sind beispielsweise α-Alkene mit bis zu 12 Kohlenstoffatomen, wie Propylen, Buten, Penten, Hexen, Octen, ferner Vinylester, wie Vinylacetat, Ester der Acrylsäure, Methacrylsäure, Maleinsäure oder Fumarsäure von Alkoholen, die 1 bis 8 C-Atome enthalten. Die Polyolefine besitzen im allgemeinen einen Schmelzindex MFI (230; 2,16) (nach DIN 53 735) zwischen 0,5 und 15, vorzugsweise zwischen 1 und 12 und einen Schmelzbereich zwischen 100°C und 170°C, sowie eine Scherviskosität zwischen 1 x 10³ und 1 x 10⁶, gemessen in einem Rotationsviskosimeter bei 150°C und einem Kreisfrequenzbereich von 10⁻² bis 10² s⁻¹. Auch Mischungen verschiedener Polyolefine können verwendet werden.

Bevorzugt eingesetzt werden Ethylen-Propylen-Copolymere und Copolymere von Ethylen, Propylen und einem C₄- bis C₈-α-Olefin.

Besonders bevorzugte Ethylen-Propylen-Copolymere sind Copolymere aus 0,5 bis 6 Gew.-% Ethylen und 94 bis 99,5 Gew.-% Propylen.

Besonders bevorzugte Copolymere von Ethylen, Propylen und einem C₄- bis C₈-α-Olefin sind Copolymere aus 0,5 bis 6 Gew.-%, vorzugsweise 1 bis 6 Gew.-%, insbesondere 1,5 bis 6 Gew.-% Ethylen, 88 bis 99 Gew.-%, vorzugsweise 89 bis 98 Gew.-%, insbesondere 90 bis 97 Gew.-% Propylen und 0,5 bis 6 Gew.-%, vorzugsweise 1 bis 6 Gew.-%, insbesondere 1 bis 5 Gew.-% eines C₄- bis C₈-α-Olefins, wie Buten-1, Penten-1, Hexen-1, Hepten-1 oder Octen-1. Die Copolymeren sollen einen G-Modul von 100 bis 800, vorzugsweise 100 bis 700, insbesondere 150 bis 600 N/mm² aufweisen.

Die Herstellung der Copolymeren erfolgt in bekannter Weise durch Copolymerisation der Monomeren mittels Übergangsmetallkatalysatoren. Die Copolymeren zeigen einen überwiegend statistischen Aufbau, sie sind im allgemeinen linear aufgebaut und im allgemeinen unvernetzt. Der Kristallitschmelzpunkt, bestimmt nach der DSC-Methode, liegt im allgemeinen zwischen 110 und 155, insbesondere zwischen 115 und 150°C. Die Schmelzwärme, bestimmt nach der DSC-Methode, liegt im allgemeinen zwischen 30 und 110 J/g, vorzugsweise zwischen 35 und 100 J/g. Vorzugsweise werden Copolymere mit einem Schmelzindex MFI (230; 2,16) (nach DIN 53 735) von 0,5 bis 15, insbesondere 1 bis 12 [g/10 min] verwendet.

Polyolefine im Sinne der Erfindung sind außerdem Impact-Copolymere aus
a) 1 bis 55 Gew.-% eines Blockcopolymerisats aus
   a₁) 35 bis 65 Gew.-% Ethylen und
   a₂) 35 bis 65 Gew.-% Propylen, sowie
b) 45 bis 99 Gew.-% eines statistischen Copolymerisats aus
   b₁) 0,5 bis 6 Gew.-% Ethylen und
      94 bis 99,5 Gew.-% Propylen, oder aus
   b2) 0,5 bis 12 Gew.-% Buten-(1) und
      88 bis 99,5 Gew.-% Propylen.

Entsprechende Schaumpartikel sind in der DE-A-41 26 358 näher beschrieben.

Die eingesetzten vorgeschäumten Teilchen aus einem thermoplastischen Polymeren werden durch Imprägnieren des thermoplastischen Polymeren mit einem Treibmittel und anschließendes Aufschäumen hergestellt.

Die Imprägnierung kann hierbei bereits bei der Herstellung des thermoplastischen Polymeren erfolgen, wie beispielsweise im Falle von Polystyrol oder Styrolcopolymerisat, wo häufig die Polymerisation in wässriger Suspension in Gegenwart des Treibmittels geschieht. Durch Erwärmen der treibmittelhaltigen Polymerperlen auf Temperaturen in der Nähe des Erweichungspunktes des Polymeren können dann vorgeschäumte Teilchen erhalten werden.

Die Herstellung der vorgeschäumten Teilchen erfolgt im Falle von Polyolefinen durch Vermischen des Polyolefins mit einem Treibmittel und gegebenenfalls einer Schäumhilfe und von Zusatzstoffen und anschließendes Verschäumen. Beispielsweise werden die Zuschlagstoffe in einem Extruder vermischt und das Gemisch anschließend durch eine Düse extrudiert und zu Granulaten verarbeitet.

Geeignete Treibmittel sind anorganische Gase wie Kohlendioxid und Stickstoff, niedrig siedende Fluorkohlenwasserstoffe, Kohlendioxid und vorzugsweise aliphatische Kohlenwasserstoffe mit 3 bis 7 C-Atomen, wie beispielsweise Propan, n-Butan, Isobutan, n-Pentan, Isopentan und/oder Neopentan. Auch Gemische der genannten Treibmittel können verwendet werden.

Geeignete Schäumhilfen sind beispielsweise in der EP-A 168 954 und der DE-A 42 00 559 angegeben.

Übliche Zusatzstoffe sind beispielsweise Farbstoffe, Pigmente, Keimbildner, Stabilisatoren, Flammschutzmittel, Synergisten, Füllstoffe, Weichmacher, Gleitmittel und Antistatika.

Durch die Mitverwendung von Keimbildnern kann die Zellgröße reguliert werden. Geeignete Keimbildner sind beispielsweise Talkum, Calciumcarbonat, Calciumsulfat, Diatomeenerde, Magnesiumcarbonat, Magnesiumhydroxid und Magnesiumsulfat.

Vorzugsweise werden die vorgeschäumten Polyolefinteilchen nach dem Suspensions-Imprägnier-Verfahren hergestellt. Das Polyolefin wird dazu zweckmäßig in Form von Partikeln mit einem mittleren Durchmesser von 0,5 bis 5 mm, vorzugsweise 0,6 bis 4 mm, in wäßriger Suspension gegebenenfalls in Gegenwart von Schäumhilfen und Zusatzstoffen, mit 0,1 bis 0,4, vorzugsweise 0,15 bis 0,3 kg pro kg des Polyolefins, eines Treibmittels bei einer besonders bevorzugt etwa 5 bis 20°C unter dem Kristallitschmelzpunkt (DSC-Maximum beim zweiten Aufheizen) des Polymeren liegenden Temperatur unter Druck imprägniert und anschließend unter Aufschäumen entspannt.

Die erhaltenen vorgeschäumten Polyolefin-Teilchen weisen im allgemeinen einen mittleren Durchmesser zwischen 1 und 20 mm und eine Schüttdichte von etwa 7 bis 55 g/l auf.

Bei dem Verfahren ist es im allgemeinen ohne Bedeutung, welcher Zeitraum seit der Herstellung der vorgeschäumten Teilchen vergangen ist. Üblicherweise liegt jedoch zwischen der Herstellung der vorgeschäumten Teilchen und der Durchführung des erfindungsgemäßen Verfahrens ein Zeitraum von 1 bis 4 Wochen.

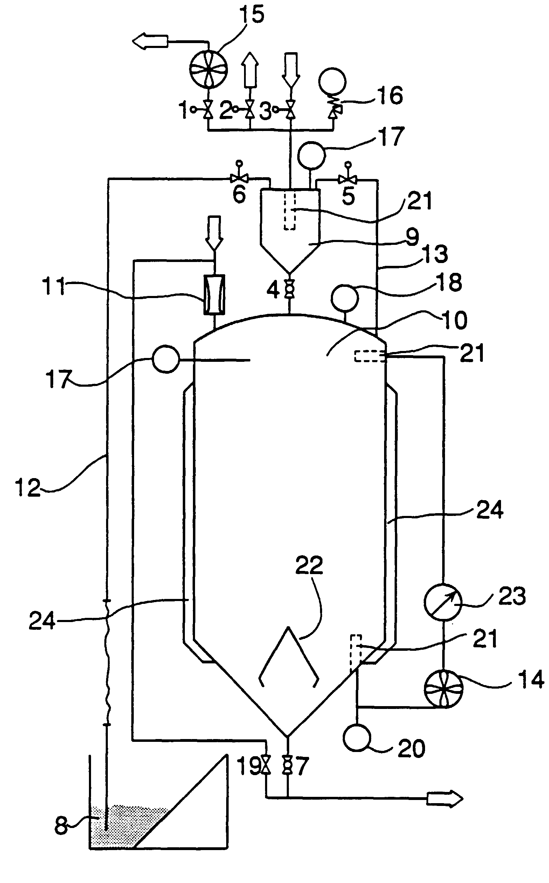

Die erfindungsgemäße Vorrichtung ist anhand der in der Figur gezeigten Ausführungsform der Erfindung näher erläutert.

In der Figur bezeichnet 8 den Vorratsbehälter für die vorgeschäumten Teilchen aus einem thermoplastischen Polymeren, 9 die Druckschleuse und 10 den Druckbeladungsbehälter. 1 bis 3, 5 und 6 bezeichnen Ventile, 4 und 7 Kugelhähne, 11 eine Druckluftregelung, 12 und 13 Leitungen für den Transport der vorgeschäumten Teilchen (im folgenden auch Schaumpartikel oder Schaumteilchen genannt), 14 und 15 Sauggebläse, 16 ein Sicherheitsventil, 17 Maximalstandsanzeigen, 18 ein Manometer, 19 ein Handventil, 20 ein Thermometer, 21 perforierte Metallrohre, 22 einen Verdrängerkörper, 23 einen Wärmeaustauscher und 24 einen Doppelmantel zur Temperierung.

Der Transport der Schaumpartikel aus dem Vorratsbehälter 8 über die Druckschleuse 9 in den Druckbeladungsbehälter 10 erfolgt durch eine Leitung 12 (Schlauch oder Metallrohr). Der Transport und die Druckbehandlung werden mit Hilfe der Ventile 1 bis 3, 5 und 6 sowie der Kugelhähne 4 und 7 gesteuert.

Als Medium für den Transport und die Druckbehandlung der Schaumpartikel wird ein anorganisches Gas wie Stickstoff, Luft, oder ein Edelgas verwendet, wobei dem anorganischen Gas bis zu 10 Vol.-% eines organischen Treibmittels beigefügt sein können. Als Medium wird vorzugsweise ein anorganisches Gas verwendet, das keine organischen Treibmittel enthält. Besonders bevorzugt wird Luft eingesetzt.

Die Druckbehandlung der vorgeschäumten Teilchen wird so durchgeführt, daß zunächst die Ventile 2, 3 und 5 sowie der Kugelhahn 4 geschlossen sind und Ventile 1 und 6 geöffnet werden. Das hinter 1 befindliche Sauggebläse 15 läuft an, worauf die Schaumpartikel vom Vorratsbehälter 8 infolge des erzeugten Unterdrucks zur Druckschleuse 9 transportiert werden. Dann werden die Ventile 1 und 6 geschlossen.

Die Verfahrensweise im nächsten Schritt ist abhängig von der gewünschten Druckdifferenz zwischen Druckschleuse 9 und Druckbeladungsbehälter 10.

Wenn Druckschleuse 9 und Druckbeladungsbehälter 10 den gleichen Druck aufweisen sollen, wird Ventil 5 geöffnet und dadurch ein Druckausgleich über die Leitung 13 herbeigeführt. Bei anschließender Öffnung von Kugelhahn 4 fließen die Schaumpartikel von der Druckschleuse 9 in den Druckbeladungsbehälter 10.

Wenn dagegen der Druck in der Druckschleuse 9 höher sein soll als im Druckbeladungsbehälter 10 (beispielsweise 4,2 bar in der Druckschleuse 9 und 4 bar im Druckbehandlungsgefäß 10), wird Ventil 3 geöffnet, hinter dem sich eine Quelle für Druckluft befindet. Bei anschließender Öffnung von Kugelhahn 4 fließen die Schaumpartikel aufgrund der Druckdifferenz rascher in das Druckbehandlungsgefäß als im Falle von Druckgleichheit.

Der Kugelhahn 4 und gegebenenfalls Ventil 5 werden nach einer vorgegebenen Zeit geschlossen. Das Ventil 2 wird geöffnet und dadurch die Druckschleuse auf Atmosphärendruck entlüftet.

Im Druckbeladungsbehälter 10 wird dann eine Druckbehandlung der Schaumpartikel durchgeführt. Hierzu werden die Schaumpartikel mit dem anorganischen Gas bei Temperaturen zwischen 20 und 90°C, vorzugsweise zwischen 50 und 90°C, und einem Druck zwischen 0,5 und 5 bar so lange behandelt bis der Innendruck in den Schaumpartikeln den gewünschten Wert erreicht hat. Hierzu genügen in der Regel wenige Stunden.

Zur Bestimmung des Innendrucks werden die Schaumpartikel in einen druckfesten Glaszylinder überführt, bis eine vorgegebene Schüttdichte erreicht ist. Dann wird der Glaszylinder unter Druck gesetzt, wobei der Druck beginnend mit Atmosphärendruck gesteigert wird, bis eine Komprimierung (Volumenabnahme) der Schaumpartikelschüttung einsetzt. Der Druck, bei der die Komprimierung einsetzt, ist gleich dem Innendruck der Schaumpartikel.

Im Vergleich hierzu dauert ein Füllvorgang über die Druckschleuse 9 in der Regel nur wenige Minuten. In der Ausführungsform der Figur bleibt die Druckschleuse 9 nach Beendigung eines Füllvorganges so lange leer, bis ein Signalgeber das Unterschreiten der unteren Füllstandsgrenze im Druckbeladungsbehälter 10 anzeigt und dadurch ein neuer Füllvorgang initiiert wird. Es ist allerdings auch möglich, daß die Schaumpartikel zwischen den einzelnen Füllvorgängen in der Druckschleuse 9 verbleiben.

Die Druckbehandlung wird in der Regel bei einem Druck von 0,5 bis 5 bar durchgeführt, wobei der Effekt der Erfindung besonders ausgeprägt ist bei Drücken von 2 bis 4 bar.

Der Druck in der Druckschleuse 9 ist mindestens gleich dem Druck im Druckbehandlungsgefäß 10, liegt in der Regel jedoch nicht mehr als 1 bar darüber. Der Druck in der Druckschleuse 9 ist vorzugsweise um 0,1 bis 0,8 bar, besonders bevorzugt um 0,1 bis 0,4 bar höher als im Druckbehandlungsbehälter 10.

Es ist besonders vorteilhaft, wenn in der Druckschleuse 9 vor der Überführung der Schaumteilchen in den Druckbeladungsbehälter 10 ein Druck von 2 bis 4 bar aufgebaut wird. Bei einer Druckdifferenz zwischen Druckschleuse 9 und Druckbehandlungsbehälter 10 von 0,1 bis 0,4 bar ist ein besonders schnelles Befüllen des Druckbeladungsbehälters 10 möglich, ohne daß die darin ablaufende kontinuierliche Druckbehandlung durch Druckschwankungen und/oder Verwirblungen behindert wird.

Die Temperatur in der Druckschleuse kann in weiten Bereichen variiert werden, beispielsweise zwischen 20 und 80°C, beträgt aber zweckmäßig zwischen 15 und 30°C.

Es hat sich gezeigt, daß eine Schüttdichte der Schaumteilchen von 10 bis 40 g/l besonders vorteilhaft ist. In diesem Schüttdichtebereich ist die Erhöhung des Produktdurchsatzes besonders hoch, ohne daß gleichzeitig Verwirblungen im Druckbeladungsbehälter 10 auftreten, wenn es bei Zufuhr von Schaumteilchen aus der Druckschleuse 9 zu Druckschwankungen kommt.

Die nach diesem Verfahren erhaltenen druckbehandelten Teilchen können nach bekannten Verfahren durch Erhitzen in porösen oder nicht gasdicht schließenden Formen zu beliebigen Formkörpern verschweißt werden.

Hierzu werden die druckbehandelten Teilchen in der Regel druck- oder saugpneumatisch in einen Druckfüllbehälter überführt, aus dem heraus die Füllung von Formteilmaschinen erfolgt, in denen Formteile mit der gewünschten Form und Dichte hergestellt werden. Ein Beispiel für die Herstellung von geschäumten Formkörpern aus thermoplastischem Harz ist in der EP-A 153 706 beschrieben.

Die in den Beispielen genannten Teile und Prozente beziehen sich auf das Gewicht.

### Beispiele

Es wurden verschiedene Schaumteilchen A bis E hergestellt, die anschließend verschiedenen Druckbehandlungen unterzogen wurden, bevor sie durch Erhitzen in einer nicht gasdicht schließenden Form zu Formkörpern verschweißt wurden.

### Herstellung der Schaumteilchen

### Schaumteilchen A

In einem Druckkessel wurden 100 Teile eines Copolymeren aus 2,6 Gew.-% Ethylen und 97,4 Gew.-% Propylen (Meltindex 230/2,16 = 9 g/10 min; DSC-Maximum 147°C; mittleres Korngewicht ca. 1,5 mg), 16 Teile n/i-Buten (60:40), 230 Teile Wasser, 7 Teile Tricalciumphosphat und 0,14 Teile Na-dodecylbenzolsulfonat als Dispergierhilfsmittel unter Rühren innerhalb von 60 min. auf 133°C erhitzt und anschließend, während der Druck im Kessel durch Nachpressen mit Stickstoff auf 30 bar konstant gehalten wurde, durch ein Bodenventil ausgetragen und entspannt. Es wurden Schaumteilchen der Schüttdichte 30 g/l mit einer Zellzahl von 10 - 150 Zellen/mm² erhalten.

### Schaumteilchen B bis E

Es wurde gearbeitet wie bei der Herstellung der Schaumteilchen A, jedoch unter Verwendung von Copolymeren mit der in der Tabelle 1 angeführten Zusammensetzung, sowie unterschiedlichen Mengen an Treibmitteln und Dispergierhilfsmitteln, wobei unterschiedliche Imprägniertemperaturen und Imprägnierzeiten eingehalten wurden.

Die Schaumteilchen A bis E wurden zentrifugiert, in einem Blitztrockner bei 120°C für 2 Minuten getrocknet und anschließend in einem Vorratsgefäß 3 Tage gelagert.

### Druckbehandlung der Schaumteilchen

### Beispiel 1

Entsprechend der Figur wurden die Schaumteilchen A oder B aus dem Vorratsgefäß 8 wie oben beschrieben bei Raumtemperatur saugpneumatisch in die Druckschleuse 9 überführt, in welcher anschließend mit Druckluft ein Druck von 4,2 bar eingestellt wurde. Anschließend wurden die in der Druckschleuse 9 befindlichen Schaumteilchen in den Druckbeladungsbehälter 10 (Behältervolumen 10 m³) überführt, in dem sie bei einer Temperatur von 70°C mit Luft unter einem Druck von 4,0 bar beaufschlagt wurden. Die Zuführung von Schaumteilchen aus der Druckschleuse 9 und der Austrag von druckbehandelten Schaumteilchen aus dem Druckbeladungsbehälter 10 wurde so gesteuert, daß die mittlere Verweilzeit der Schaumteilchen im Druckbeladungsbehälter 10 5 Stunden betrug. Die druckbehandelten Schaumteilchen wiesen nach dieser Zeit einen Innendruck von 0,7 bar auf.

### Beispiele 2 und 5 bzw. Vergleichsbeispiele 3, 4 und 6

Es wurde gearbeitet wie in Beispiel 1, jedoch unter Verwendung der in der Tabelle 2 angegebenen Bedingungen. Im Beispiel 5 und Vergleichsbeispiel 6 wurden jeweils die Schaumteilchen C, D oder E eingesetzt.

In den Vergleichsbeispielen wurden die Schaumteilchen aus dem Vorratsbehälter 8 saugpneumatisch unter Weglassung der Druckschleuse 9 direkt in den Druckbeladungsbehälter 10 überführt und unter den in der Tabelle 2 angegebenen Bedingungen einer Druckbehandlung unterzogen. Die Druckbehandlung wurde dabei so lange durchgeführt, bis in den Schaumteilchen ein Innendruck eingestellt war, der wie bei den erfindungsgemäßen Beispielen zur gleichen Formteildichte führte. Als Maß für die Effektivität der in den Beispielen und Vergleichsbeispielen durchgeführten unterschiedlichen Verfahren ist in der Tabelle der Durchsatz als Menge an druckbehandelten Schaumteilchen pro Zeiteinheit angegeben.

Bei den erfindungsgemäßen Beispielen ist für eine kontinuierliche Produktion von Schaumteilchen nur ein Druckbeladungsbehälter notwendig, bei den Vergleichsbeispielen sind es dagegen zwei.

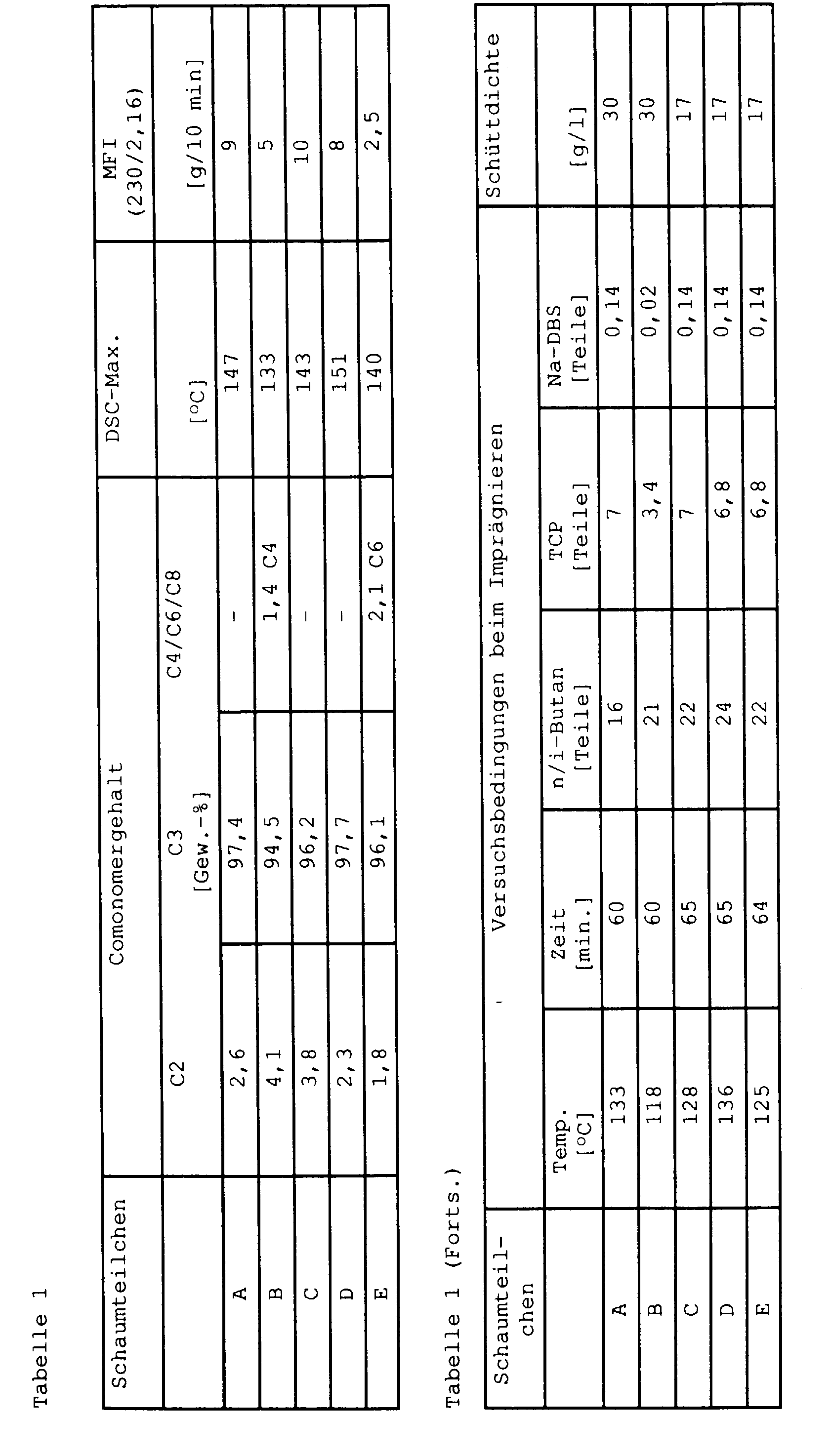

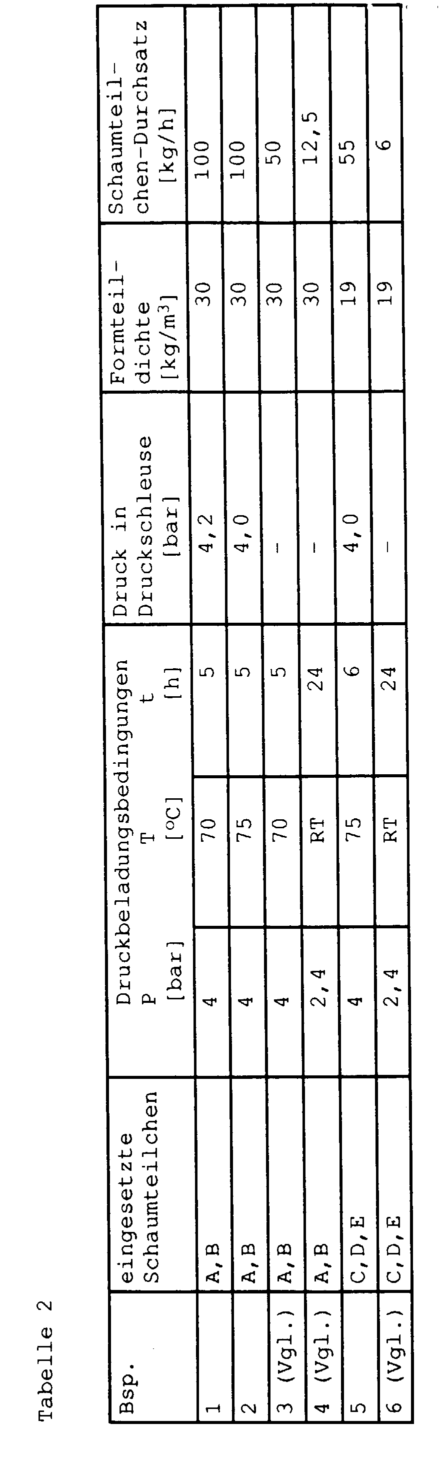

## Patentansprüche

1. Vorrichtung zur Druckbehandlung von vorgeschäumten Teilchen aus einem thermoplastischen Polymeren, bestehend aus einem Vorratsbehälter 8 für die vorgeschäumten Teilchen und einem Druckbehandlungsbehälter 10, zwischen die eine Druckschleuse 9 angeordnet ist, dadurch gekennzeichnet, daß der Druckbehandlungsbehälter aus einer einzigen Kammer besteht.

## Claims

1. An apparatus for the pressure treatment of prefoamed particles of a thermoplastic polymer, comprising a stock tank 8 for the prefoamed particles and a pressure-treatment tank 10, between which a pressure lock 9 is arranged, wherein the pressure-treatment tank comprises a single chamber.

## Revendications

1. Dispositif de traitement sous pression d'articles pré-expansés en un polymère thermoplastique, qui se compose d'un réservoir d'approvisionnement 8 pour les particules pré-expansées et d'un réservoir de traitement sous pression 10, disposé entre un sas de pression 9, caractérisé en ce que le réservoir de traitement sous pression se compose d'une seule chambre.
